# EUROPEAN PATENT APPLICATION

(11) **EP 1 748 648 A1**
(43) Date of publication of application: **31.01.2007**
(21) Application number: 06113493.8
(22) Date of filing: 04.05.2006
(51) Int. Cl.: H04N 5/445

(54) **Receiving apparatus**

(30) Priority: 26.07.2005 JP 2005216406
(71) Applicant: KABUSHIKI KAISHA TOSHIBA, Tokyo 105-8001 (JP)
(72) Inventor: Nakata, Ryoji Toshiba Corporation, Minato-ku Tokyo 105-8001 (JP)
(74) Representative: Henkel, Feiler & Hänzel

(57) **Abstract**

The invention aims at providing a receiving apparatus which is capable of reducing an unpleasant feeling for a user or those around him/her resulting from a received sound when a reserved program is recorded, and of reducing wasteful power consumption. When a user selects "SILENCE" of items (620) to be set from a timer reservation setting picture (600), and sets "SILENCE" to "YES", a CPU makes a silence setting, and stores the set contents in an internal storing portion. At a time to start a broadcasting of a timer-reserved program, the CPU starts the recording of the timer-reserved program. At this time, the CPU performs the control so as not to output a received sound in accordance with the set contents stored in the internal storing portion.

## Description

The present application is based on Japanese patent application No. 2005-216406, the entire contents of which are incorporated herein by reference.

### BACKGROUND OF THE INVENTION

### Field of the Invention

The present invention relates to a receiving apparatus having a program timer reserving function.

### Description of Related Art

A television/radio receiving apparatus which is easy to carry and a broadcasting system aiming at such a portable receiving apparatus have been developed, and dedicated broadcasting programs have also started to be broadcasted. In order to make such a receiving apparatus easy to carry, the receiving apparatus has been miniaturized. On the other hand, a recording medium such as a DVD, an HDD, or a memory card has also progressed in miniaturization in accordance with promotion of high recording density. For this reason, in recent years, a mobile broadcasting-receiving apparatus for digitally recording a program digitally broadcasted into a recording medium has become popular.

This sort of recording apparatus displays an Electronic Program Guide (EPG) picture containing an EPG, and adopts a system for, when a user selects a program from the EPG picture, automatically setting a picture recording date on which the program is recorded. Thus, it is possible for a user to save the labor by which the user himself/herself conventionally sets and registers date on time at which a desired program will be broadcasted in order to perform the picture recording reservation.

On the other hand, a digital broadcasting receiving apparatus having a program picture recording-reserving function and a program reserving function has been proposed, as disclosed in the Japanese Patent Kokai No. 2002-320169.

However, according to the conventional mobile broadcasting-reserving apparatus, in the case where the program picture recording reservation is made, a received image and a received sound are outputted at a time to start the reserved program where the output of them is unnecessary. As a result, the received sound may give a user in sleeping or those around him/her an unpleasant feeling depending on a volume of the sound output, and the wasteful power consumption is caused.

In addition, according to the digital broadcasting-receiving apparatus disclosed in the Japanese Patent Kokai No. 2002-320169**,** where the reservation is made for the seeing and listening of a program concurrently with the recording of the program, a user must set the reservation for the seeing and listening of the program separately from the picture recording reservation of the program. Thus, the operationality is poor for the user.

### SUMMARY OF THE INVENTION

In the light of the foregoing, it is an object of the present invention to provide a receiving apparatus which is capable of reducing an unpleasant feeling for a user or those around him/her resulting from a received sound when a reserved program is recorded.

According to an aspect of the present invention, there is provided a receiving apparatus including: a receiving portion for receiving a broadcasting of a predetermined program; a recording portion for recording the predetermined program; a reserving portion for reserving recording of the predetermined program; a setting portion for, when the recording portion records the predetermined program reserved by the reserving portion, setting whether or not a sound of the predetermined program is outputted; a displaying portion for displaying thereon information on the reservation made by the reserving portion and a setting of a sound output made by the setting portion; and a battery for supplying an electric power to the respective portions including the receiving portion, the recording portion and the displaying portion.

According to the receiving apparatus described above, the received sound is outputted to the outside, whereby a user can know that a reserved program starts to be broadcasted. In addition, it is very unpleasant for the user to output the received sound when he/she is on an electric train or in sleeping. Thus, the user makes a silence setting for stopping the output of the received sound for a place where the received sound should not be outputted. On the other hand, when the user desires to know that a program starts to be broadcasted, the received sound is outputted to the outside.

The setting portion, when the recording portion is making the recording, may make a setting for causing the sound to be outputted, and when the recording portion finishes the recording, may make the setting for stopping the output of the sound. As a result, it is possible to reduce the wasteful power consumption.

The setting portion, where a setting for outputting the sound of the predetermined program is made, may set a sound volume of the sound. The user may not desire the received sound to be outputted with a large sound volume depending on a place where the user stays or the circumstances. Thus, if it becomes a set time and a speaker suddenly outputs the received sound, the user or those around him/her are prevented from being given an unpleasant feeling since the sound volume can be previously set.

The setting portion may set whether or not an information signal like an audible signal such as an alarm, or a body sensible signal such as a vibration is outputted at a start time of the predetermined program or before the start time. The information signal is outputted before a start time of the predetermined program, whereby the user can know that the timer-reserved program will start to be broadcasted in a short time. In addition, a setting for outputting the audible signal as the information signal is made, whereby the user can readily know the start of the broadcasting of the program. In addition, a setting for outputting the body sensible signal as the information signal is made, whereby the user can know from the vibration or the like that the program will start to be broadcasted even in a place where the sound should not be outputted as in an electric train or even when he/she does not desire the sound to be outputted as in sleeping. The audible signal contains an alarm, a piece of music, or the like.

The setting portion, where a setting for outputting the information signal is made, may set a time when the information signal is outputted. Some users notice the information signal even when its output period of time is short, and others do not notice the information signal unless its output period of time is long. Hence, it is convenient for the users to set their favorite output times by the individual users.

The setting portion, where a setting for outputting the audible signal as the information signal is made, may set a sound volume of the audible signal. The degree of the feeling sensitive to the sound volume differs among the users. Some users notice the audible signal with a large sound volume, and others notice the audible signal even with a small sound volume. Hence, it is convenient for the users to allow their favorite sound volumes to be set by the individual users. In addition, even in a place where the large sound should not be outputted, the user can know that the program starts to be broadcasted with a small sound volume.

The setting portion, where a setting for outputting the audible signal as the information signal is made, may select a method from a first method of outputting the audible signal with the same sound volume while the audible signal is outputted, and a second method of changing a sound volume between a low level and a high level in a step manner. If a large sound suddenly rings like an alarm when the user is in sleeping, it gives the user an unpleasant feeling. In addition, it gives the user no unpleasant feeling to increase the sound volume level from a low level to a high level in a step manner when the user desires to use the audible signal instead of an alarm clock.

The setting portion, where a setting for outputting the audible signal as the information signal is made, may set a sound pattern of the audible signal. With this construction, the sound pattern of the audible signal can be set, whereby the users can know that the set programs start to be broadcasted with sounds which are to their tastes, respectively.

The setting portion, where a setting for outputting the information signal before a time of starting the predetermined program is made, may make the setting for stopping the output of an information signal at the time of starting the predetermined program. In the case where the audible signal is used as the information signal, when the user silences no audible signal since he/she notices no sound which he/she set, this gives those around the user trouble in some cases. In addition, when the user specifies a time when the information signal should be silenced, the labor for silencing the sound set by the user set is saved for him/her.

The setting portion, where a setting for outputting the information signal before a time of starting the predetermined program, may set a time between a time when the information signal is outputted and a time when the predetermined program starts to be broadcasted. Setting a time between a time when the information signal is outputted and a time when the predetermined program starts to be broadcasted becomes easier than setting a time when the information signal is outputted.

According to the present invention, it is possible to reduce an unpleasant feeling for the user or those around him/her resulting from a received sound when the reserved program is recorded.

### BRIEF DESCRIPTION OF THE DRAWINGS

**FIG. 1** is a view showing a schematic construction of a receiving system according to an embodiment of the present invention;
**FIG. 2** is a block diagram showing an internal configuration of a receiving apparatus according to the embodiment of the present invention;
**FIG. 3** is a plan view showing details of an operation portion shown in **FIG. 1;**
**FIGS. 4A** and **4B** are respectively diagrams showing an example of timer reservation setting information stored in an internal storing portion shown in **FIG. 2;**
**FIG. 5** is a diagram showing an EPG picture;
**FIG. 6** is a diagram showing a timer reservation setting picture;
**FIG. 7A** is a flow chart showing a flow of program timer reservation;
**FIG. 7B** is a flow chart showing a flow of the program timer reservation; and
**FIG. 8** is a flow chart showing a flow of a recording operation at a time which is set in the program timer reservation.

### DETAILED DESCRIPTION OF PREFERRED EMBODIMENTS

Hereinafter, an embodiment of the present invention will be described in detail with reference to the accompanying drawings.

### (Construction of System)

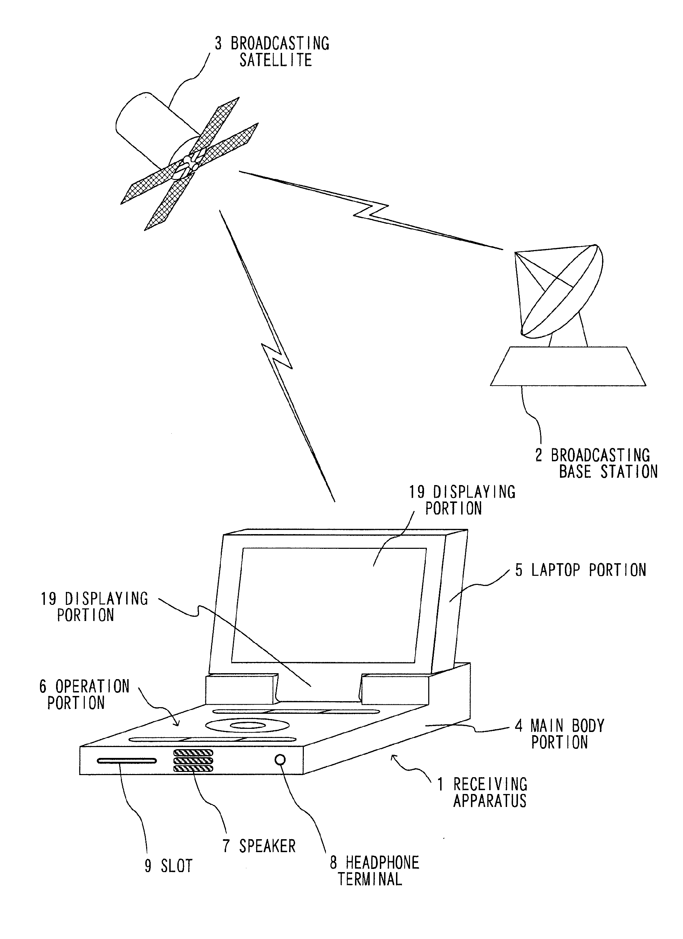

**FIG. 1** shows a schematic construction of a receiving system according to an embodiment of the present invention. The receiving system is schematically constituted by a broadcasting base station **2** which is installed on the ground and which can transmit a plurality of digital broadcastings such as a television program broadcasting and a radio program broadcasting, and a mobile broadcasting-receiving apparatus **1** which receives a broadcasting electric wave from the broadcasting base station **2** via a broadcasting satellite **3** located in a space.

It should be noted that while **FIG. 1** shows an example when the satellite broadcasting is received, the receiving apparatus **1** of the present invention is not limited thereto. Thus, one which receives ground wave broadcastings, one which receives broadcastings through a transmission medium such as a cable, one which receives bidirectionally broadcastings, or the like may also be adopted.

With the mobile broadcasting-receiving apparatus **1,** a user can select a program which he/she wants to enjoy among a plurality of broadcastings, and can see and listen to the selected program. The mobile broadcasting-receiving apparatus **1** has a program recording-reserving function with which the user can reserve the recording of a program. The mobile broadcasting-receiving apparatus **1** includes a main body portion **4** having an antenna, an electronic circuit, a battery for supplying an electric power to the respective portions of the mobile broadcasting-receiving apparatus **1,** and the like built therein, and a laptop portion **5** which is provided closeably in an upper portion of the main body portion **4** through a hinge portion **1**a.

The main body portion **4** is provided with an operation portion **6** including various kinds of switches on its upper surface. Also, the main body portion **4** is provided with a speaker **7,** a headphone terminal **8,** and a slot **9** into which a memory card as will be described later is inserted on its front. Incidentally, the speaker **7** and the headphone terminal **8** constitute a sound-outputting portion.

The laptop portion **5** includes a displaying portion **19** such as a liquid crystal display device, or an organic EL display device.

When the user desires to see and listen to a television program, the display portion **19** displays thereon a program image, and the sound outputting portion outputs a program sound. On the other hand, when the user desires to listen to a radio program, the sound-outputting portion outputs a program sound, and at the same time, the displaying portion **19** displays thereon information or the like on the contents of the program and pieces of music being currently broadcasted. Whether a television broadcasting or a radio broadcasting is selected is determined by operating the operation portion **6.**

### (Internal Configuration of Mobile Broadcasting-Reproducing Apparatus 1)

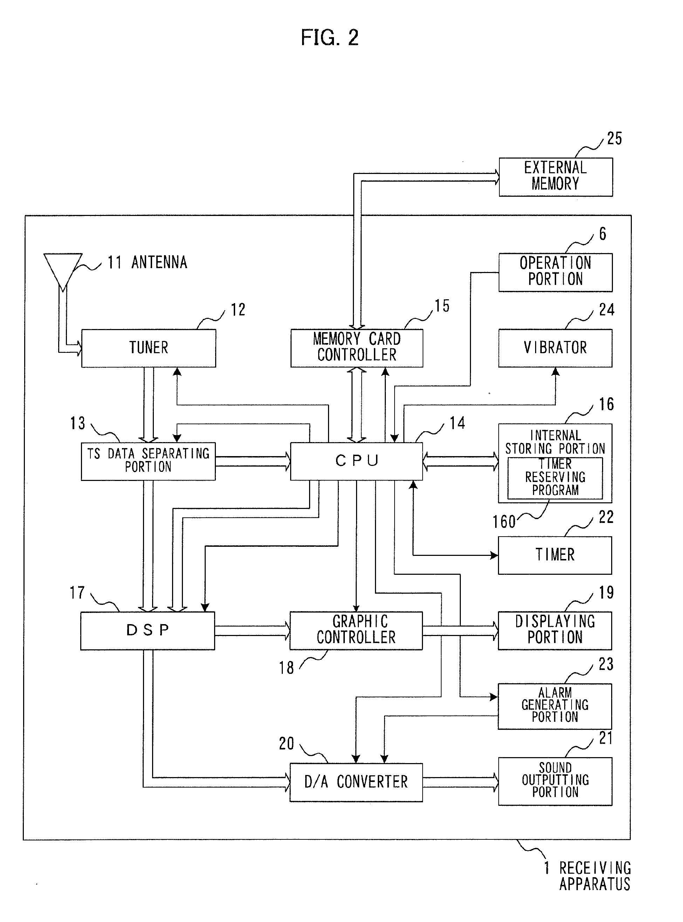

**FIG. 2** is a block diagram showing an internal configuration of the mobile broadcasting-receiving apparatus **1.** The receiving apparatus **1** includes an antenna **11,** a tuner **12,** a transport stream (TS) data-separating portion **13,** a CPU **14,** a memory card controller **15,** an internal storing portion **16,** a digital signal processor (DSP) **17,** a graphic controller **18,** a displaying portion **19,** a D/A converter **20,** a sound-outputting portion **21,** a timer **22,** an alarm generating portion **22,** and a vibrator **24.**

The antenna **11** receives thereat a broadcasting electric wave, about a satellite broadcasting program, which is outputted from the broadcasting base station **2** and transmitted via the broadcasting satellite **3.** Also, the antenna **11** converts the broadcasting electric wave received thereat into an electrical signal and transmits the resulting electrical signal to the tuner **12.**

The tuner **12** selects necessary data from a digital program broadcasting signal transmitted thereto through the antenna **11,** and transmits the necessary data thus selected to the TS data-separating portion **13.**

The TS data-separating portion **13** separates the digital program broadcasting signal received thereat from the tuner **12** into video/sound data on a program image and a program sound, and management information data such as EPG data and management data. Also, the TS data-separating portion **13** transmits the management information data and the video/sound data to the CPU **14** and the DSP **17,** respectively.

The CPU **14** manages the control for the functions in the receiving apparatus **1**. Thus, the CPU **14** transmits signals to the constituent portions to instruct the constituent portions to perform the various kinds of operations, respectively. In addition, the CPU **14** performs the control for the transmission of the data during storage and reading of the received management information data in and from the internal storing portion **16.**

The memory card controller **15** controls a memory card or the like as an external memory **25,** and performs the reading and writing of the program data which is recorded with image and sound from and to the external memory **25.**

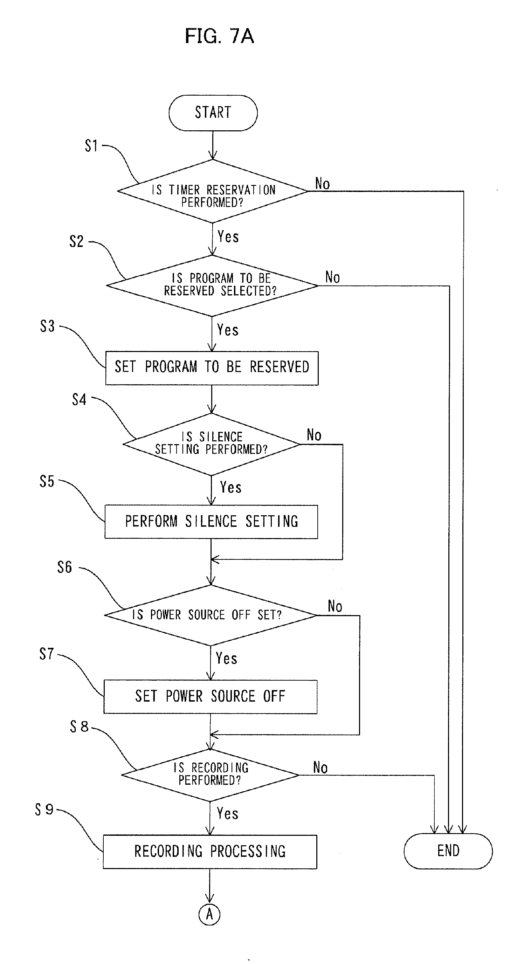

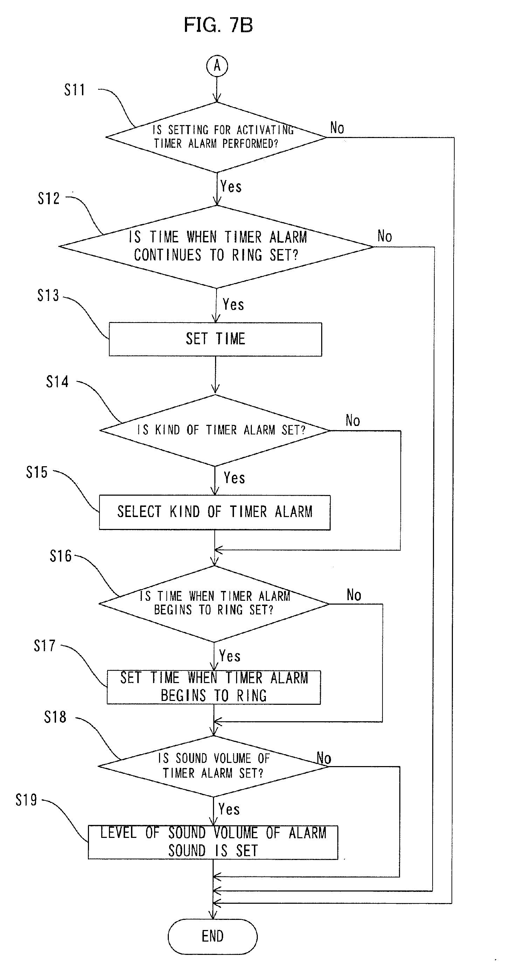

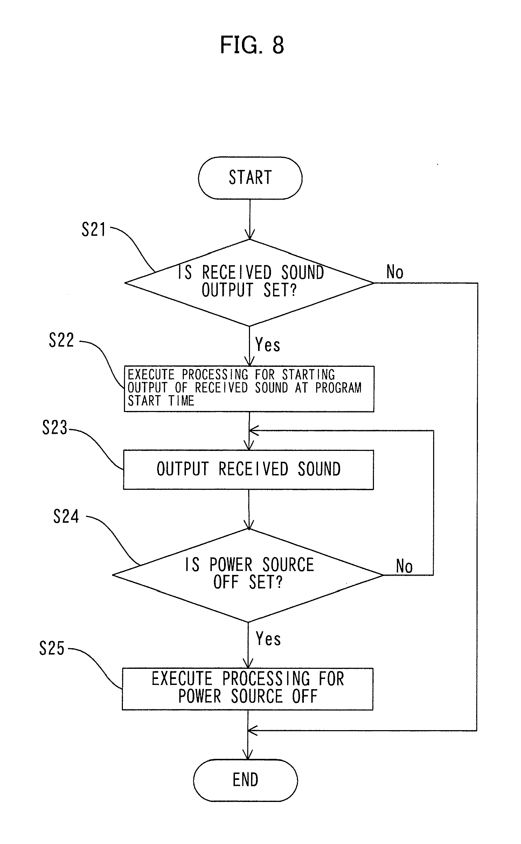

The internal storing portion **16** is used to store a program, such as a timer-reserving program 160 as shown in FIGS. **7A** and **7B,** and **FIG. 8** and as will be described later, which the CPU **14** is instructed to execute in order to drive the receiving apparatus **1,** temporarily store the various kinds of parameters, the management information data, and the like which are used in the program, and store the program data which is recorded with image and sound. More specifically, a ROM, a RAM, an HDD or the like corresponds to the internal storing portion **16.**

The DSP **17** executes arithmetic operation processing for the video/sound data which is received from the TS data-separating portion **13.** Also, the DSP **17** transmits the video data and the sound data to the graphic controller **18** and the D/A converter **20,** respectively.

The graphic controller **18** processes the video data received from the DSP **17** so that the displaying portion **19** can display thereon the resulting data. Also, the graphic controller **18** transmits the resulting data to the displaying portion **19.**

The displaying portion **19** displays the video data received from the graphic controller **18** on its monitor. The image to be displayed is an image of the television program from the satellite broadcasting, character information on a sound program, information on the apparatus setting for the receiving apparatus **1,** or the like.

The D/A converter **20** converts the sound data received from the DSP **17** or the alarm-generating portion **23** from digital data into analog data. Also, the D/A converter **20** transmits the resulting analog sound data to the sound-outputting portion **21.**

The sound-outputting portion **21** converts the analog sound signal received from the D/A converter **20** into the sound and outputs the resulting sound. The sound-outputting portion **21** includes an amplifier (not shown), the speaker **7,** the headphone terminal **8,** and the like.

The timer **22** has a clock calendar function and informs the CPU **14** of timer information such as the current date and time, and a day of the week.

The alarm-generating portion **23** has a plurality of kinds of sound generation patterns which are generated in speech synthesis. The alarm-generating portion **23** outputs the sound generation pattern selected by using a selection signal from the CPU **14** to the D/A converter **20.**

The vibrator **24** has a vibration generating mechanism, and generates vibrations in accordance with a driving signal from the CPU **14.**

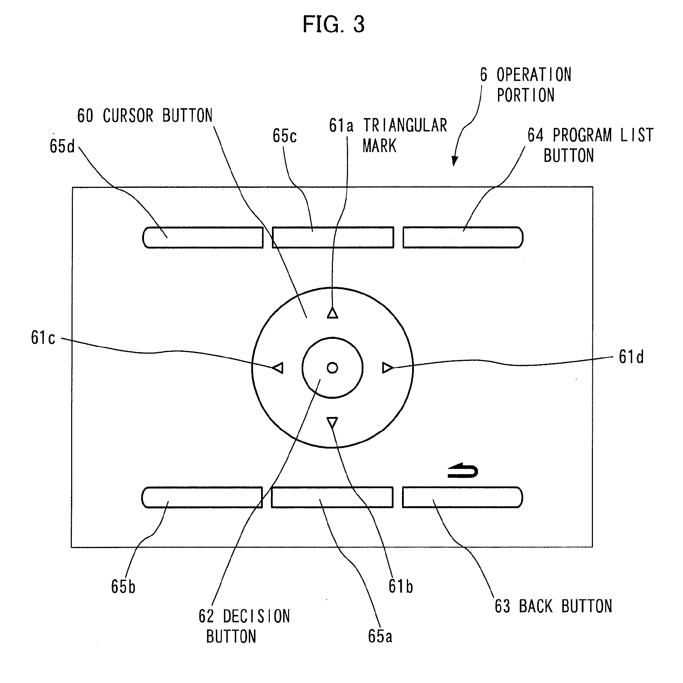

**FIG. 3** shows details of the operation portion **6.** The operation portion **6** includes a doughnut-like cursor button **60** having triangular marks **61a** to **61d** provided vertically and horizontally on its surface, a circular decision button **62** provided inside the cursor button **60,** a slender back button **63,** a program list button **64,** and other buttons **65a** to **65d.** The cursor button **60,** the decision button **62,** and the back button **63** will be described later. In **FIG. 3,** reference numeral **64** designates a program list button for display of a list of programs being currently broadcasted, reference numeral **65a** designates a stop button for stop of the reproduction of the recorded data, reference numeral **65b** designates a button for display of information on a data information service, reference numeral **65c** designates a button for display of a memo list recorded in the memory card, and reference numeral **65d** designates a quick/setting button for display of a quick menu and a setting menu.

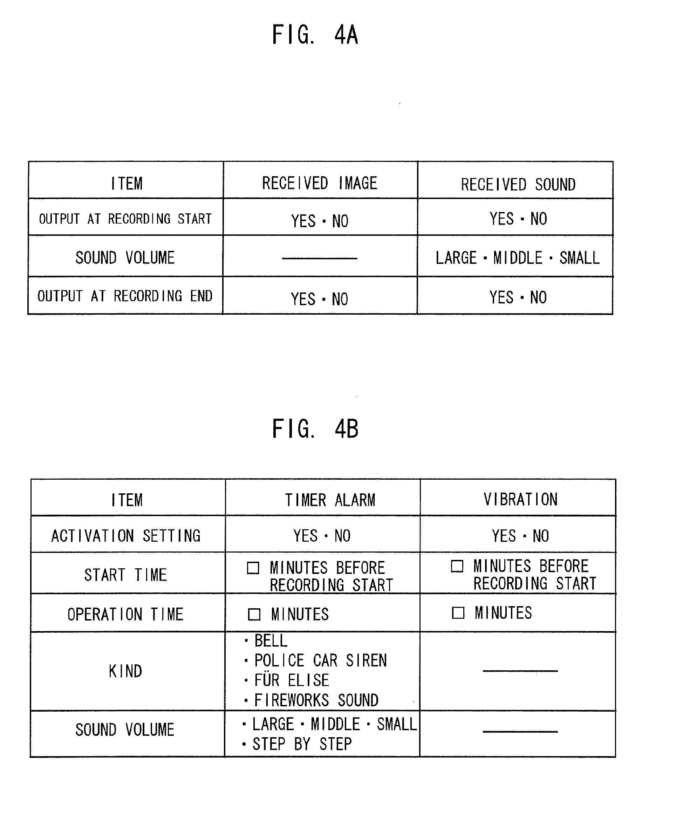

**FIGS. 4A** and **4B** show an example of timer reservation setting information stored in the internal storing portion **16.** For a received image and a received sound, as shown in **FIG. 4A,** it is possible to set "YES·NO" relating to whether or not the received image and the received sound are outputted at the start of the recording, a sound volume of "HIGH·MIDDLE·LOW", and "YES·NO" relating to whether or not the output of the received image and the received sound is finished at the end of the recording. "YES·NO" relating to whether or not the output of the received image and the received sound is finished at the end of the recording can be set when the output at the start of the recording is set to "YES".

For the timer alarm and the vibration, as shown in **FIG. 4B,** it is possible to set "YES·NO" relating to whether or not activation setting is made, the operation start time relating to how many minutes the operation is started before the start of the recording, and the operation time. For the timer alarm, it is possible to further select a kind of alarm such as a sound such as a bell sound, a police car siren or a fireworks sound, or a piece of music such as "Für Elise". Also, it is possible to select a sound volume of "HIGH·MIDDLE·LOW". The selection can also be made such that the sound volume is increased "STEP BY STEP".

### (Operation of Mobile Broadcasting-Receiving Apparatus 1)

Next, an operation of the mobile broadcasting-receiving apparatus **1** will be described in detail with reference to **FIGS. 1** to **8.**

### (1) Timer Reservation

**FIGS. 7A** and **7B** show respectively flow charts explaining program timer reservation. When the user depresses the quick/setting button **65d** of the operation portion **6,** the CPU **14** instructs the displaying portion **19** to display thereon a menu picture. When the user selects timer reservation from the menu picture (S1: Yes), the CPU **14** executes processing of the flow charts shown in **FIGS. 7A** and **7B** in accordance with the timer reservation program **160,** and instructs the displaying portion **19** to display thereon an Electronic Program Guide (EPG) picture having an EPG.

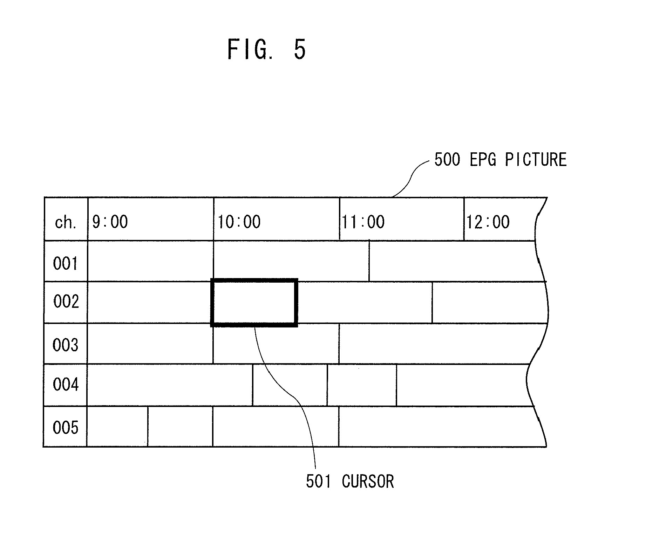

**FIG. 5** shows the EPG picture. A broadcasting program is represented in the form of a cell every channel in the EPG picture **500.** A program name and program contents are displayed in each cell. The user depresses the cursor button **60** of the operation portion **6** to locate the cursor **501** in a display position of a program which he/she desires to record, and then depresses the decision button **62** to make the decision (S**2:** Yes). As a result, the CPU **14** sets the program to be reserved (S**3**), and instructs the displaying portion **19** to display thereon a timer reservation setting picture. In this case, it is assumed that a radio program is reserved.

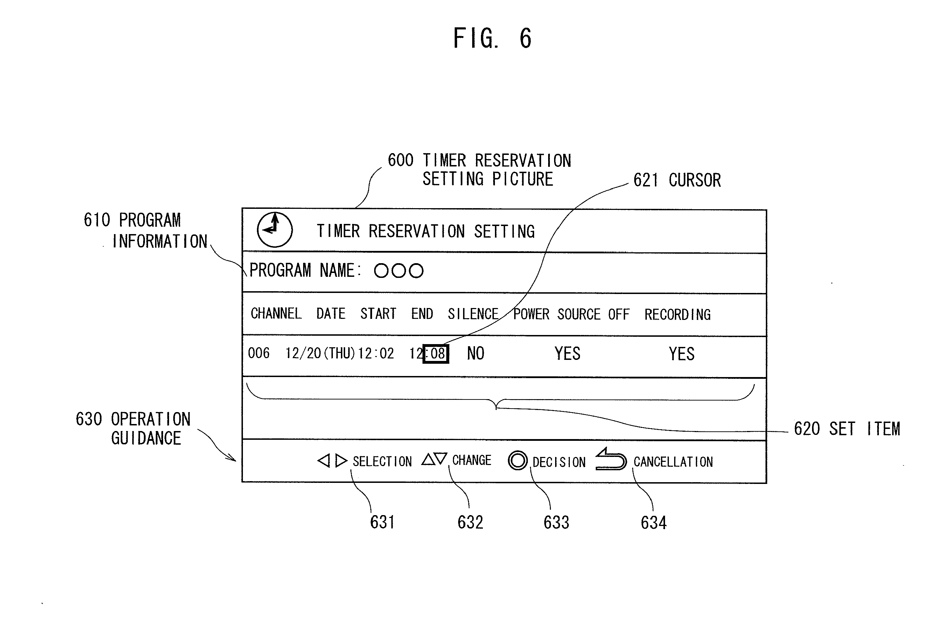

**FIG. 6** shows the timer reservation setting picture. Program information **610** such as a program name is displayed in an upper portion of the timer reservation setting picture **600.** Items **620** to be set such as "CHANNEL", "DATE", "START", "END", "SILINCE", "POWER SOURCE OFF", "RECORDING", and a cursor **621** are displayed in a central portion thereof. Also, operation guide **630** is displayed in a lower portion thereof. Selection **631** of the items **620** to be set, a change **632** of set contents in the items **620** to be set, decision **633** of change of the set contents, and cancellation **634** for returning the current channel back to the channel selected last time are displayed in the operation guide **630.** The respective functions are performed by operating the buttons of the operation portion **6** corresponding to these kinds of display.

When the user selects the program to be recorded, a channel name, the date and a day of week, the broadcasting start time, the broadcasting end time are displayed in "CHANNEL", "DATE", "START", and "END", respectively. Also, "NO" and "YES" are displayed as default values in "SILENCE" and "POWER SOURCE OFF", respectively. Here, "SILENCE" means that no received sound is outputted through the speaker **7.** "POWER SOURCE OFF" means that the supply of the electric power to the constituent portions (the display portion **19** and the like) other than the portions concerned in the control for the CPU **14** and the timer **22** is cut off at the time which is set in "END" of the items **620** to be set shown in **FIG. 6** (power saving state).

The triangular marks **61c** and **61d** which are horizontally provided of the cursor button **60** of **FIG. 3** are depressed in correspondence to the selection **631** of the operation guide **630,** whereby the cursor **621** can be horizontally moved to select the items **620** to be set. After completion of the selection of the items **620** to be set, the triangular marks **61a** and **61b** which are vertically provided of the cursor button **60** of **FIG. 3** are depressed in correspondence to the change **632** of the operation guide **630,** thereby allowing the set contents to be changed. After completion of the change of the set contents, the decision button **62** corresponding to the decision **633** is depressed, thereby allowing the set contents to be decided. The times of "START" and "END" of the items **620** to be set can also be changed. "SILENCE" and "POWER SOURCE OFF" can be changed to "YES" and "NO", respectively.

Next, when the user selects "SILENCE" of the items **620** to be set and sets "SILENCE" to "NO" (S**4:** No), the CPU **14** performs no silence setting (S**5**)**.** Then, when the user selects "POWER SOURCE OFF" of the items **620** to be set and sets "POWER SOURCE OFF" to "YES" (S**6:** Yes), the CPU **14** sets the power source OFF (S**7**). Next, when the user sets the recording (S**8**)**,** the CPU **14** executes the recording processing **(S9).** That is to say, the CPU **14** stores the above-mentioned set contents in the internal storing portion **16.** At that, when the user sets "SILENCE" of the items **620** to be set to "YES" (S**4:** Yes), the CPU **14** performs the silence setting (S**5**).

Next, when the user selects an alarm setting picture, the CPU **14** instructs the displaying portion **19** to display thereon the alarm setting picture. When the user makes the setting for activating a timer alarm (S**11:** Yes), and the setting of a period of time for which the timer alarm continues to ring (ringing period of time) (S**12:** Yes), the CPU **14** stores information on the ringing period of time set by the user in the internal storing portion **16** (S**13**).

Next, when the user sets a kind of timer alarm (S**14:** Yes), the CPU **14** stores information on the kind of timer alarm set by the user in the internal storing portion **16 (S15) .**

Next, when the user sets a time when the timer alarm begins to ring (alarm start time) (S**16:** Yes), the CPU **14** stores information on this time in the internal storing portion **16** (S**17**). The alarm start time can be made agree with the start time of the program for which the timer-reservation is made. Alternatively, it is also possible to set how many minutes the alarm is made ring before the start time of the program.

Next, when the user sets a sound volume of the timer alarm (S**18:** Yes), the CPU **14** stores a value of the sound volume set by the user in the internal storing portion 16 (S**19**)**.**

### (2) Recording of Program According to Timer Reservation

**FIG. 8** shows a flow chart of an operation for recording a program which is set in accordance with the program timer reservation. The CPU **14** executes processing of the flow chart shown in **FIG. 8** in accordance with the timer reserving program **160.** At that, it is assumed that the receiving apparatus **1** is in the power saving state.

When the CPU **14** knows that it becomes the time to start the recording in accordance with the timer information from the timer **22,** the electric power is supplied to the respective portions of the receiving apparatus **1,** and the recording operation starts to be performed.

The CPU **14** checks the storage contents in the internal storing portion **16** to judge whether or not the received sound output is set therein (S**21**). When judging in S**21** that the received sound output is set in the internal storing portion **16** (S**21:** Yes), the CPU **14** executes the processing for starting the received sound output at the program start time (S**22**). The CPU **14** controls the memory card controller **15** to record information on the program in the memory card inserted to the slot **9.** Also, the CPU **14** controls the D/A converter **20** to make the speaker **7** of the sound outputting portion **21** output the received sound (S**23**).

At that, when judging in S**21** that no received sound output is set (S**21:** No), the CPU **14** controls the D/A converter **20** so as not to make the speaker **7** output the received sound even when it becomes the time to start the program.

Next, the CPU **14** judges whether or not the power source OFF is set (S**24**). When judging in S**24** that the power source OFF is set (S**24:** Yes), the CPU **14** executes the processing for the power source OFF at the program end time (S**25**).

### (Effects of Embodiment)

According to this embodiment, the following effects are offered.
(i) Since the received sound is outputted through the speaker **7** at the recording start time based on the timer reservation, the user can know that the set program has started to be broadcasted.
(ii) The time when the alarm sound starts to ring is set before the time of starting the program, whereby the user can know that the timer-reserved program will start to be broadcasted in a short time.
(iii) The sound volume of the timer sound can be set, which can cope with the fact that the degree of feeling sensitive to the sound volume differs among the users. Some users notice the timer sound with a large sound volume, and others notice the timer sound with a small sound volume. Hence, it is convenient for the users that the sound volumes which are to their tastes, respectively, can be set. Also, even in a place where the large sound should not be outputted, the user can know that the program starts to be broadcasted with the small sound volume.
(iv) Since the sound pattern of the timer sound can be set, the user can know that the set programs start to be broadcasted with the sounds which are to their tastes, respectively.
(v) Since the output of the received sound can be stopped while the broadcasting program is recorded, it is possible to reduce the wasteful power consumption.

It should be noted that the present invention is not limited to the above-mentioned embodiment, and thus the various changes can be implemented without departing from the gist of the invention. For example, while in the above-mentioned embodiment, the radio broadcasting programs have been described so far, the invention can be similarly applied to the television broadcasting programs as well.

In addition, while the alarm has been described as the information signal so far, according to the present invention, even when the vibration is used as the information signal, the operation start time, the operation end time, and the like can be set similarly to the use of the alarm.

Also, while in the above-mentioned embodiment, the power saving state is provided at the end of the timer recoding, the supply of all the electric powers may be cut off at the end of the timer recoding.

Moreover, while in the above-mentioned embodiment, the information on the timer-reserved program is stored in the external memory, a large-capacity storing portion such as an HDD may be provided in the main body portion **4**, and the information on the timer-reserved program may be stored in the large-capacity storing portion.

## Claims

1. A receiving apparatus comprising:
a receiving portion for receiving a broadcasting of a predetermined program;
a recording portion for recording the predetermined program;
a reserving portion for reserving recording of the predetermined program;
a setting portion for, when the recording portion records the predetermined program reserved by the reserving portion, setting whether or not a sound of the predetermined program is outputted;
a displaying portion for displaying thereon information on the reservation made by the reserving portion and a setting of a sound output made by the setting portion; and
a battery for supplying an electric power to respective portions including the receiving portion, the recording portion and the displaying portion.

2. The receiving apparatus according to claim 1, wherein:
the setting portion, when the recording portion is making the recording, makes a setting for causing the sound to be outputted, and when the recording portion finishes the recording, makes the setting for stopping the output of the sound.

3. The receiving apparatus according to claim 1, wherein:
the setting portion, where a setting for outputting the sound of the predetermined program is made, sets a sound volume of the sound.

4. The receiving apparatus according to claim 1, wherein:
the setting portion sets whether or not an information signal like an audible signal such as an alarm, or a body sensible signal such as a vibration is outputted at a start time of the predetermined program or before the start time.

5. The receiving apparatus according to claim 4, wherein:
the setting portion, where a setting for outputting the information signal is made, sets a time when the information signal is outputted.

6. The receiving apparatus according to claim 4, wherein:
the setting portion, where a setting for outputting the audible signal as the information signal is made, sets a sound volume of the audible signal.

7. The receiving apparatus according to claim 6, wherein:
the setting portion, where a setting for outputting the audible signal as the information signal is made, selects a method from a first method of outputting the audible signal with the same sound volume while the audible signal is outputted, and a second method of changing a sound volume between a low level and a high level in a step manner.

8. The receiving apparatus according to claim 4, wherein:
the setting portion, where a setting for outputting the audible signal as the information signal is made, sets a sound pattern of the audible signal.

9. The receiving apparatus according to claim 4, wherein:
the setting portion, where a setting for outputting the information signal before a time of starting the predetermined program is made, makes a setting for stopping an output of the information signal at the time of starting the predetermined program.

10. The receiving apparatus according to claim 4, wherein:
the setting portion, where a setting for outputting the information signal before a time of starting the predetermined program, seta a time between a time when the information signal is outputted and a time when the predetermined program starts to be broadcasted.
